# EUROPÄISCHE PATENTSCHRIFT

(11) **EP 1 203 167 B1**
(45) Veröffentlichungstag und Bekanntmachung des Hinweises auf die Patenterteilung: **29.10.2003**
(21) Anmeldenummer: 01945179.8
(22) Anmeldetag: 21.05.2001
(51) Int. Cl.: F16C 13/04

(54) **LAUFROLLENSTATION ZUR KIPPBEWEGLICHEN ABSTÜTZUNG EINES DREHROHRES**
ROLLER SUPPORT SYSTEM FOR SUPPORTING A ROTATING TUBULAR BODY SO THAT IT CAN BE TILTED
STATION A CYLINDRES DE ROULEMENT POUR SOUTENIR DE FA ON BASCULANTE UN CORPS TUBULAIRE ROTATIF

(30) Priorität: 22.05.2000 DE 10025245
(43) Veröffentlichungstag der Anmeldung: 08.05.2002
(73) Patentinhaber: Polysius AG, 59269 Beckum (DE)
(72) Erfinder: KÖRTING, Reinhard, 59320 Ennigerloh (DE); AUF DEM VENNE, Johannes, 59320 Ennigerloh (DE); PETERWERTH, Bernhard, 49196 Bad Laer (DE); KÄSTINGSCHÄFER, Gerhard, 59329 Wadersloh (DE)
(74) Vertreter: Tetzner, Michael, Dipl.-Ing.
(86) Internationale Anmeldenummer: EP0105824
(87) Internationale Veröffentlichungsnummer: WO01090589

(56) Entgegenhaltungen:
- EP-A- 0 019 136
- EP-A- 0 567 777
- DE-C- 567 736
- DE-C- 858 340
- US-A- 5 462 370

## Beschreibung

Die Erfindung betrifft eine Laufrollenstation zur kippbeweglichen, axialverschiebbaren, drehbaren Abstützung eines umlaufend antreibbaren Drehrohres, wie Drehrohrofen, Trommeltrockner u.dgl., entsprechend dem Oberbegriff des Anspruches 1.

Um Drehrohre mit relativ großen Abmessungen, und zwar sowohl in bezug auf den Durchmesser als auch in bezug auf die Länge, zuverlässig drehbar abstützen bzw. lagern zu können, bedient man sich - wie allgemein bekannt - wenigstens zweier Laufrollenstationen, die mit entsprechendem axialen Abstand voneinander angeordnet sind. Bei derart groß dimensionierten Drehrohren, wie z.B. Drehrohröfen, Trommeltrocknern u.dgl., läßt es sich nicht vermeiden, daß zum einen gewisse Montageungenauigkeiten und zum andern mehr oder weniger starke Verformungen und Verkrümmungen der zugehörigen Rohrmäntel auftreten, was besonders stark bei Drehrohren mit großer Wärmeeinwirkung, wie bei Drehrohröfen, zum Ausdruck kommt. Dies führt im praktischen Betrieb zu Taumelbewegungen im Bereich der ein solches Drehrohr auf den entsprechenden Laufrollen abstützenden Laufflächen, die durch entsprechende Ausbildungen am Drehrohr-Außenumfang bzw. durch auf den entsprechenden Rohrabschnitten angebrachte Lauf ringe gebildet werden. Um ein durch derartige Taumelbewegungen der Drehrohr-Laufflächen bedingtes, verschlechtertes Tragverhalten ausgleichen und darauf zurückzuführende Abnutzung (Verschleiß) und Beschädigungen an den miteinander in Eingriff stehenden Umfangsflächen bzw. Laufflächen herabsetzen zu können, sind bereits zahlreiche Ausführungsformen von Laufrollenstationen bekannt, bei denen die Laufrollen und/oder die sie tragenden Sohlplatten kippbeweglich und/oder axial verschiebbar gegenüber einem ortsfesten Fundament abgestützt sind.

Hierbei ist grundsätzlich zu beachten, daß das oben bereits angesprochene ungleichförmige Tragverhalten in der Kontaktfläche zwischen zwei sich berührenden Zylindern durch eine sogenannte "Schränkung" und/oder durch ein sogenanntes "Kantentragen" verursacht werden kann. Unter einer "Schränkung" versteht man den Sachverhalt, daß die parallelen Mittelachsen zweier sich berührender Zylinder um ihre gemeinsame verbindende Normale zueinander verdreht werden, wobei die verdrehten Mittelachsen keinen gemeinsamen Schnittpunkt haben. Bei einer solchen Schränkung entsteht eine ungleichförmige Pressungsverteilung in den Kontaktflächen mit dem Maximum in der Mitte der Kontaktflächen (über die Zylinderlänge gesehen), und zusätzlich werden durch die Schränkung bei dem Abrollvorgang zwischen den Zylinderumfangsflächen (z.B. zwischen Lauf ring eines Drehrohres und einer Laufrolle) Axialkräfte, d.h. Kräfte in Richtung der Zylinderachsen, in den Kontaktflächen erzeugt, wenn entsprechende Gegenkräfte (z.B. eine axial wirkende sogenannte "Hangabtriebskraft" eines Drehrohrofens) vorhanden sind. Unter einem Kantentragen versteht man den Sachverhalt, daß die parallelen Mittelachsen zweier sich berührender Zylinder in ihrer gemeinsamen Ebene zueinander verdreht werden, wobei die verdrehten Mittelachsen einen gemeinsamen Schnittpunkt haben. Bei diesem Kantentragen verteilt sich die sogenannte "Hertz'sche Pressung" ungleichförmig über die Kontaktflächen auf der Zylinderlänge, d.h. die resultierende Druckkraft aus der Integration der Flächenpressung (Hertz'sche Pressung) wirkt einseitig radial auf die sich berührenden Zylinder.

In der Praxis versucht man nun, mit selbsteinstellenden Laufrollen bzw. Laufrollensystemen die Schränkung und das Kantentragen zu verhindern und damit ein günstiges Tragbild (konstante Hertz'sche Pressung) zwischen Drehrohr-Laufflächen und Außenumfangsflächen der Laufrollen möglichst bei allen Betriebsbedingungen zu erreichen. Um allen möglichen Bewegungen (Taumelschlägen usw.) der Laufflächen folgen zu können, müßte beispielsweise die Sohlplatte einer Laufrolle so gelagert sein, daß sie mindestens zwei Drehfreiheitsgrade um die theoretischen Achsen der Schränkung und des Kantentragens besitzt. Eine sphärische Lagerung würde diesen Anspruch selbstverständlich erfüllen. Bei einer solchen Lagerung entsteht jedoch ein labiles, mechanisches System, d.h. die Laufrolle kann sich unkontrolliert zur Drehrohr-Lauffläche bewegen. Der kritische Freiheitsgrad dieser Selbsteinstellung ist die Drehung um die theoretische Drehachse der Schränkung, wobei die Schränkung der Laufrolle durch außermittige Umfangskräfte (Schleppkräfte bei nicht angetriebenen Laufrollen und Antriebskräfte bei angetriebenen Laufrollen) verursacht wird. Mit zunehmender Drehung bzw. Schränkung entstehen keine Rückstellkräfte an der Laufrolle, so daß die Laufrolle außer Kontrolle gerät. Ein solches System ist nicht funktionsfähig.

Um die beschriebene Labilität zu vermeiden, ist es aus der Praxis bekannt, die Sohlplatte einer selbsteinstellenden Laufrolle so zu lagern, daß keine unkontrollierbare Schränkung entstehen kann, d.h. von den beiden erforderlichen Freiheitsgraden der selbsteinstellenden Lagerung der Sohlplatte wird auf den Freiheitsgrad der Schränkung verzichtet. Der verbleibende Freiheitsgrad verhindert das Kantentragen zwischen Drehrohr-Lauffläche und Laufrolle. Die so gelagerte Sohlplatte mit der fest verbundenen Laufrolle folgt der Drehrohr-Lauffläche (Laufring) durch Kippbewegungen nur in einer Richtung und verhindert so das erwähnte Kantentragen. Die Lage der theoretischen Drehachse, um die die Kippbewegungen erfolgen, spielt eine wesentliche Rolle für die Empfindlichkeit der Selbsteinstellung gegen Axialkräfte seitens der Drehrohre.

Bei einer aus EP-A-0 019 136 bekannten Ausführung, die etwa der im Oberbegriff des Anspruches 1 vorausgesetzten Laufrollenstation entspricht, wird die Laufrolle mit ihrer Achse über zwei Drehlager von den beiden Enden einer kippbeweglichen Sohlplatte getragen. Diese Sohlplatte ist mittels eines zentralen, im wesentlichen nach Art eines Kreiszylinderteils gestalteten Pendellagers gelagert, das mit der Innenseite einer Lagerschale in Form eines ringförmigen Zylindersegments in verschiebbarer Berührung steht, dessen Außenseite sich auf einem horizontalen Fundament abstützt. Das in Form eines Kreiszylinderteiles gestaltete Pendellager und die Lagerschale bzw. das Zylindersegment bilden als Einheit das eigentliche Pendellager für die Sohlplatte. Da die Innenseite des Zylindersegments mit einer Gleitfläche ausgestattet ist, kann das die Sohlplatte tragende Pendellager entlang der Zylindersegment-Innengleitfläche sich verschieben, und während dieser Verschiebung führt das Zylindersegment eine Pendelbewegung auf dem Fundament aus. Damit die Sohlplatte und die von ihr getragene Laufrolle eine der Axialbewegung des Drehrohr-Laufringes entsprechende Axialverschiebung ausführen können, sind mechanische oder hydraulische Antriebsmittel vorgesehen, die vom Laufring entsprechend betätigbar sind. Die beiden Laufrollen einer Laufrollenstation können von einer gemeinsamen Sohlplatte getragen werden, wobei unter jeder Rolle ein separates Pendellager angeordnet ist; es ist jedoch auch möglich, beide Laufrollen auf je einer separaten Sohlplatte abzustützen und beide Sohlplatten dann zur Aufnahme von Spreizkräften über Spannkabel bzw. Spannstangen miteinander zu verbinden.

Wenn bei der zuletzt beschriebenen bekannten Ausführung (EP-A-0 019 136) die weiter oben erläuterte Schränkung eingestellt werden soll, dann ist dies offensichtlich nur durch eine Verschiebung der die Laufrollenachse tragenden Drehlager auf der Sohlplatte möglich. Eine solche Verschiebung der Drehlager der Laufrollenachse auf der Sohlplatte erfordert einen relativ hohen Konstruktionsaufwand und ist dabei nur mit speziellen schweren Werkzeugen und mit relativ hohem Zeitaufwand möglich. Wenn bei dieser bekannten Ausführung zwei separate Sohlplatten für die beiden Laufrollen vorgesehen werden, dann müssen die Spannstangen o.dgl. zur Aufnahme relativ hoher Spreizkräfte und Torsionskräfte ausgebildet sein.

Der Erfindung liegt die Aufgabe zugrunde, eine Laufrollenstation gemäß dem Oberbegriff des Anspruches 1 zu schaffen, die unter Vermeidung eines Kantentragens und unter zumindest weitgehender Vermeidung einer Schränkung sowie bei relativ einfacher Konstruktion und zuverlässiger Betriebsweise eine optimale, leichtgängige Selbsteinstellung jeder Laufrolle gewährleistet.

Diese Aufgabe wird erfindungsgemäß durch die im Kennzeichen des Anspruches 1 angegebenen Merkmale gelöst.

Vorteilhafte Ausgestaltungen und Weiterbildungen der Erfindung sind Gegenstand der Unteransprüche.

Der Erfindung liegt die Erkenntnis zugrunde, daß eine selbsteinstellende Laufrolle einer Laufrollenstation neben einem stabilen Lauf zumindest folgende Forderungen erfüllen muß:
a) Die Lagerung der kippbeweglichen Sohlplatte muß leichtgängig sein, damit die Laufrolle den Taumelausschlägen der Lauffläche bzw. des Laufringes des abzustützenden Drehrohres ohne hohe Stellmomente folgen kann, wobei ein verbleibendes Kantentragen durch erforderliche Stellmomente der Sohlplattenlagerung bestimmt wird.
b) Jede selbsteinstellende Laufrolle sollte auf Kräfte in Richtung der Laufrollenachse (Axialkräfte) nicht reagieren, d.h. die stets vorhandenen Axialkräfte sollen das Tragverhalten nicht beeinflussen.
c) Unvermeidliche Eigenschwingungen (jeder Bauteil hat Eigenschwingungen) der selbsteinstellenden Laufrollen sollen durch Kräfte (bzw. deren zeitliche Veränderungen) in der Kontaktfläche zwischen Drehrohr-Lauffläche und Laufrolle unbeeinflußt bleiben, weil eine Anregung von Eigenschwingungen durch diese Kräfte zu ungleichförmigem Verschleiß der Außenumfangsfläche der Laufrollen führen würde.

Bei der erfindungsgemäßen Laufrollenstation ist daher jede eine Laufrolle tragende Sohlplatte - bei Betrachtung quer zum Drehrohr und zu den Laufrollen - auf dem Fundament über zwei mit Querabstand voneinander angeordnete Gelenklager abgestützt, von denen das näher zur vertikalen Längsmittelachse des Drehrohres liegende innere Gelenklager in Form eines Kugelgelenklagers ausgebildet und dabei als Festlager ortsfest auf dem Fundament angeordnet ist, während das von dieser vertikalen Längsmittelebene weiter entfernt liegende äußere Gelenklager ein Loslager bildet und um den Kugelmittelpunkt des inneren Kugelgelenklagers etwa kreisbogenförmig gleitbeweglich auf dem Fundament abgestützt ist.

Diese erfindungsgemäße Ausbildung ermöglicht ein optimales, leichtgängiges Selbsteinstellen jeder Sohlplatte und somit der von dieser Sohlplatte getragenen Laufrolle, wobei die Laufrollen und die sie tragenden Sohlplatten durch die auf den Außenumfangsflächen dieser Laufrollen abgestützten Laufflächen bzw. Laufringen des Drehrohres stabilisiert werden, dabei jedoch durch ihre leichtgängige Kippbeweglichkeit (über die Gelenklager) und über die etwa bogenförmige gleitbewegliche Abstützung auf dem Fundament die Voraussetzung dafür schaffen, daß zum einen ein unerwünschtes Kantentragen vermieden und zum anderen eine eventuell auftretende, unerwünschte Schränkung jeder Laufrolle durch eine entsprechende Gleitbewegung des äußeren Gelenklagers auf dem Fundament mit relativ geringem Arbeitsaufwand und rasch abgestellt werden kann.

Hierbei ist es besonders vorteilhaft, wenn im Bereich des äußeren Gelenklagers eine Stellvorrichtung vorgesehen ist und an der Sohlplatte derart angreift, daß diese Sohlplatte in Richtung der kreisbogenförmigen gleitbeweglichen Abstützung des äußeren Gelenklagers gegenüber dem Fundament verlagerbar und damit die von ihr getragene Laufrolle im Sinne einer Schränkungsverstellung gegenüber der Drehrohr-Lauffläche justierbar bzw. nachjustierbar ist.

Es wird weiterhin als vorteilhaft angesehen, wenn die beiden Gelenklager der bzw. jeder Sohlplatte im wesentlichen als Axialgelenklager ausgeführt sind und wenn in der Grundstellung von Laufrolle und Sohlplatte die Mittelachse des äußeren Gelenklagers im wesentlichen vertikal und die Mittelachse des inneren Gelenklagers mit einer Neigung zur Horizontalen ausgerichtet ist, wobei diese Neigung durch die Wirkrichtung der auf die zugehörige Laufrolle wirkenden resultierenden Kräfte bestimmt wird, d.h. diese Neigung bzw. Schräglage des inneren Kugelgelenklagers resultiert aus der vektoriellen Addition von Umfangskräften (z.B. Lagerreibungskräfte und Antriebskräfte) und Auflagerkräften auf die bzw. jede Laufrolle.

Allein ein Vergleich dieser bisher beschriebenen erfindungsgemäßen Konstruktion mit der zuletzt beschriebenen bekannten Ausführung (EP-A-0 019 136) macht zum einen die äußerst einfache und rasche Einstellmöglichkeit bei einer Schränkung der bzw. jeder Laufrolle deutlich, d.h. es können beispielsweise durch Axialkräfte seitens des Drehrohres hervorgerufene Schränkungen auf äußerst einfache Weise und mit geringem Zeit- und Kraftaufwand ausjustiert werden. Zum andern werden - im Gegensatz zu der genannten bekannten Ausführung - durch die erfindungsgemäße Konstruktion Spreizkräfte von dem als Festlager ausgebildeten inneren Kugelgelenklager aufgenommen, wodurch keine besonderen Elemente zur Aufnahme von Torsionskräften erforderlich sind.

Was die Stellvorrichtung zur Schränkungsverstellung der Laufrolle anbelangt, so kann diese auf besonders vorteilhafte und einfache Weise so ausgeführt sein, daß sie zwei mit axialem Abstand einander gegenüberliegende, relativ gegeneinander verstellbare, im wesentlichen horizontal wirkende Einstellschrauben sowie ein zwischen den gegeneinander weisenden Enden der Einstellschrauben angeordnetes Anschlagorgan enthält, dessen Seitenflächen Anschlag- bzw. Kontaktflächen für diese Schraubenenden bilden. Die Schränkungsverstellung bzw. das Justieren jeder Sohlplatte und der von ihr getragenen Laufrolle gegenüber der Drehrohr-Lauffläche kann somit auf äußerst einfache Weise mit einem sehr einfachen Handwerkzeug, beispielsweise einem Schraubenschlüssen sowie rasch und mit wenig Krafteinsatz durchgeführt werden.

Die Erfindung sei nachfolgend anhand der Zeichnung näher erläutert. In dieser Zeichnung zeigen
- Fig.1: eine ganz schematisch gehaltene Längsansicht eines beispielsweise auf zwei erfindungsgemäß ausgeführten Laufrollenstationen drehbar abgestützten Längsabschnitts eines Drehrohres;
- Fig.2: eine im vergrößerten Maßstab dargestellte, etwa in der rechten Hälfte geschnittene Quer- bzw. Stirnansicht einer erfindungsgemäßen Laufrollenstation, etwa entsprechend der Schnittlinie II-II in Fig.1;
- Fig.3: eine Seitenansicht (etwa entsprechend Pfeil III in Fig.2) einer über Gelenklager auf einem Fundament abgestützten Sohlplatte der Laufrollenstation;
- Fig.4: eine Aufsicht auf eine Sohlplatte der Laufrollenstation;
- Fig.5: eine vergrößerte Detail-Ansicht etwa entsprechend Ausschnitt V in Fig.3 zur Erläuterung einer Stellvorrichtung für die Sohlplatte;
- Fig.6: eine Vertikalschnittansicht durch ein inneres Kugelgelenklager der Sohlplatte;
- Fig.7: eine Vertikalschnittansicht durch ein äußeres Kugelgelenklager der Sohlplatte;
- Fig.8, 9 und 10: etwa gleichartige Längsseitenansichten von drei verschiedenen Ausführungsbeispielen der erfindungsgemäßen Laufrollenstation.

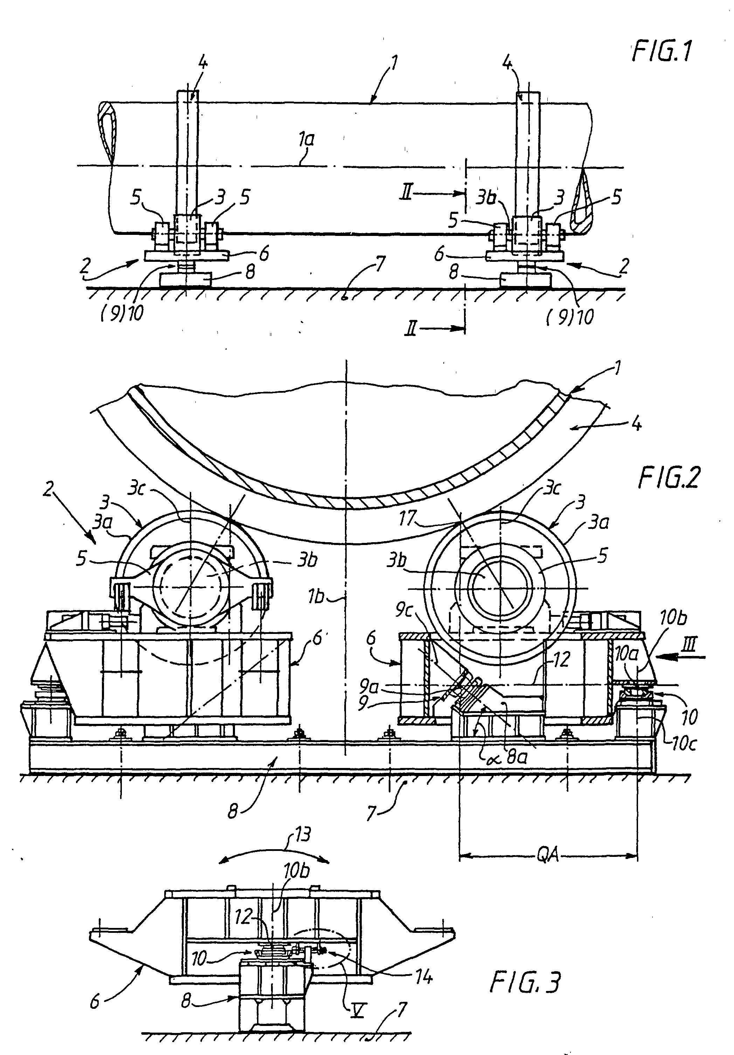

In der Längsansicht gemäß Fig.1 ist zunächst ganz allgemein dargestellt, wie ein Drehrohr bzw. ein entsprechender Längsabschnitt eines Drehrohres 1 drehbar auf beispielsweise zwei erfindungsgemäß ausgeführten Laufrollenstationen 2 abgestützt ist. Es sei beispielsweise angenommen, daß es sich bei diesem Drehrohr 1 um einen Drehrohrofen (mit entsprechend großen Abmessungen in Durchmesser und Länge) handelt, der in an sich bekannter und daher nicht näher veranschaulichter Weise um seine Längsachse 1a umlaufend angetrieben werden kann. Jede Laufrollenstation 2 kann im wesentlichen gleichartig ausgeführt sein, so daß nachfolgend lediglich eine im einzelnen erläutert zu werden braucht.

Ein zusätzlicher Blick auf die Quer- bzw. Stirnansicht gemäß Fig.2 macht deutlich, daß die (jede) Laufrollenstation 2 zwei paarweise und dabei symmetrisch zu beiden Seiten einer durch die Längsachse 1a verlaufenden vertikalen Längsmittelebene 1b des Drehrohres 1 liegende Laufrollen 3 enthält, auf deren Außenumfangsfläche bzw. Lauffläche 3a jeweils eine entsprechende Lauffläche des Drehrohres 1 drehbar abgestützt ist, wobei diese Drehrohr-Lauffläche zwar generell durch einen entsprechend verstärkten Mantelabschnitt des Drehrohres 1, vorzugsweise jedoch - wie in diesem Beispiel - durch je einen auf dem Außenumfang des Drehrohres 1 in an sich bekannter Weise angebrachten Laufring 4 (bzw. dessen Außenumfangs- bzw. Lauffläche) gebildet wird. Die sich in Achsrichtung erstreckende Breite der Laufrollen 3 und der Laufringe 4 ist in üblicher Weise aufeinander abgestimmt. Jede Laufrolle 3 ist über ihre Laufrollenachse 3b in zwei Drehlagern (üblichen Gleitlagern oder Pendelrollenlagern) frei drehbar gelagert. Diese Lagerung der Laufrollenachsen 3b in den Drehlagern 5 kann dabei zweckmäßig in an sich bekannter Weise schwimmend sein, wodurch die drehfest von der Laufrollenachse getragene Laufrolle 3 während des Betriebes auftretenden Axialbewegungen von Drehrohr 1 und Laufringen 4 begrenzt folgen kann; diese begrenzte - schwimmende - axiale Beweglichkeit von Laufrollen 3 und Laufrollenachsen 3b kann in üblicher Weise - beispielsweise mittels Druckscheiben - zur visuellen Kontrolle herangezogen werden, wodurch beim Auftreten von Axialkräften und einer dadurch bedingten Schränkung eine entsprechende Stellvorrichtung zum Ausjustieren der Schränkung betätigt werden kann, worauf später noch etwas näher eingegangen wird.

Jede Laufrollenachse 3b und die zugehörige Laufrolle 3 ist über ihre beiden Drehlager 5 auf einer Sohlplatte 6 befestigt, die ihrerseits kippbeweglich auf einem ortsfesten Fundament bzw. Fundamentboden 7 abgestützt ist. Im veranschaulichten Ausführungsbeispiel ist jede Laufrolle 3 einer Laufrollenstation 2 auf einer gesonderten Sohlplatte 6 angeordnet, wobei die beiden Sohlplatten 6 der Laufrollenstation 2 auf einem gemeinsamen Fundamentrahmen (bzw. einer gemeinsamen Fundamentplatte) 8 abgestützt sind, der seinerseits auf dem eigentlichen Fundament 7 ortsfest angeordnet ist, d.h. der gemeinsame Fundamentrahmen 8 bildet einen bzw. den Teil des ortsfesten Fundaments, auf dem sich die Sohlplatten 6 direkt abstützen, obwohl der Fundamentboden 7 auch so ausgebildet sein könnte, daß sich die Sohlplatten 6 direkt auf ihm abstützen könnten.

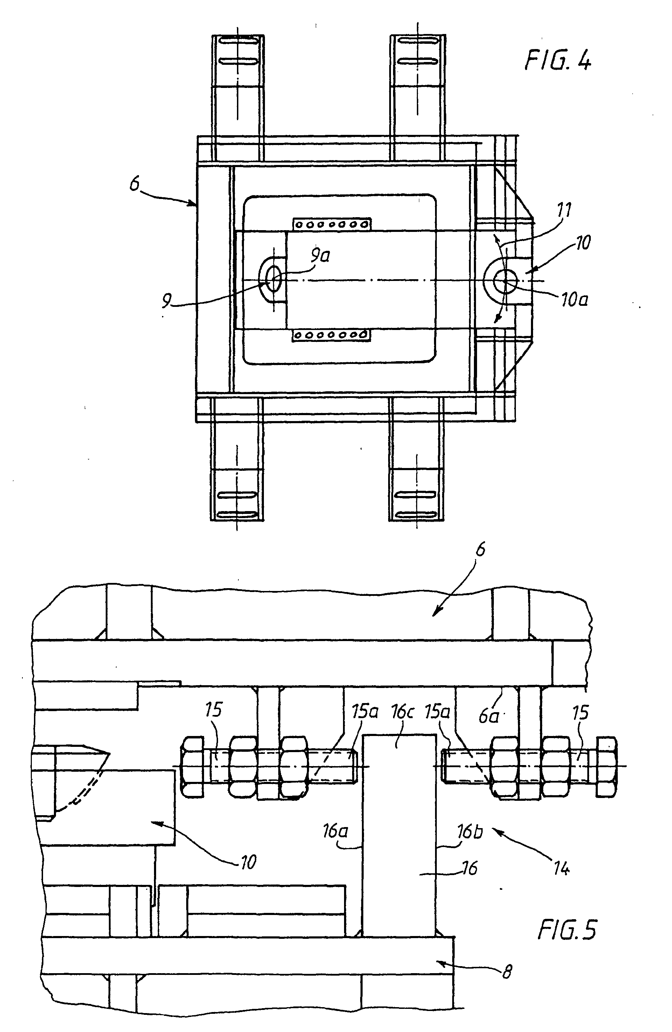

Ein wesentlicher Gedanke dieser (jeder) Laufrollenstation 2 wird nun darin gesehen, daß jede Sohlplatte 6 (und damit auch die von ihr getragene Laufrolle 3) - bei Betrachtung quer zum Drehrohr 1 und zu den Laufrollen 3, also entsprechend der Ansicht gemäß der Fig.2 - auf dem Fundamentrahmen 8 (und somit auch auf dem ortsfesten Fundament 7) über zwei mit einem entsprechenden Querabstand QA voneinander angeordnete Gelenklager 9, 10 abgestützt ist, die in der Darstellung gemäß Fig.2 lediglich im Bereich unter der rechten Sohlplatte 6 (da Teilschnittansicht) zu sehen sind, während sie in der linken Hälfte der Fig.2 (da reine Stirnansicht) verdeckt sind. Von diesen Gelenklagern 9, 10 ist das näher zur vertikalen. Längsmittelachse 1b des Drehrohres 1 liegende innere Gelenklager 9 in Form eines Kugelgelenklagers ausgebildet und dabei als Festlager ortsfest auf dem Fundamentrahmen 8 (im Bedarfsfalle jedoch auch direkt auf dem Fundamentboden 7) angeordnet. Demgegenüber bildet das von dieser vertikalen Längsmittelebene 1b weiter entfernt liegende äußere Gelenklager 10 ein Loslager, und dieses äußere Gelenklager 10 ist dabei um den Kugelmittelpunkt 9a des inneren Kugelgelenklagers 9 etwa kreisbogenförmig gleitbeweglich auf dem Fundamentrahmen 8 abgestützt, wie es in der Aufsicht gemäß Fig.4 auf die Sohlplatte 6 durch den kreisbogenförmigen Doppelpfeil 11 angedeutet ist.

In der rechten Hälfte in Fig.2 ist ferner zu erkennen, daß eine die Gelenkpunkte 9a, 10a des inneren Gelenklagers 9 und des äußeren Gelenklagers 10 verbindenden Gerade 12 eine quer verlaufende geometrische Schwenkachse bildet, die ihrerseits eine gemeinsame Kippachse für diese beiden Gelenklager 9, 10 bildet und vorzugsweise im wesentlichen etwa horizontal verläuft. Hierbei ist dann dementsprechend die zugehörige Laufrolle samt der sie tragenden Sohlplatte 6 um diese Kippachse 12, d.h. gemäß Fig.2, rechte Hälfte, senkrecht zur Zeichenebene und gemäß Fig.3 in Richtung des Doppelpfeiles 13 kippbeweglich abgestützt.

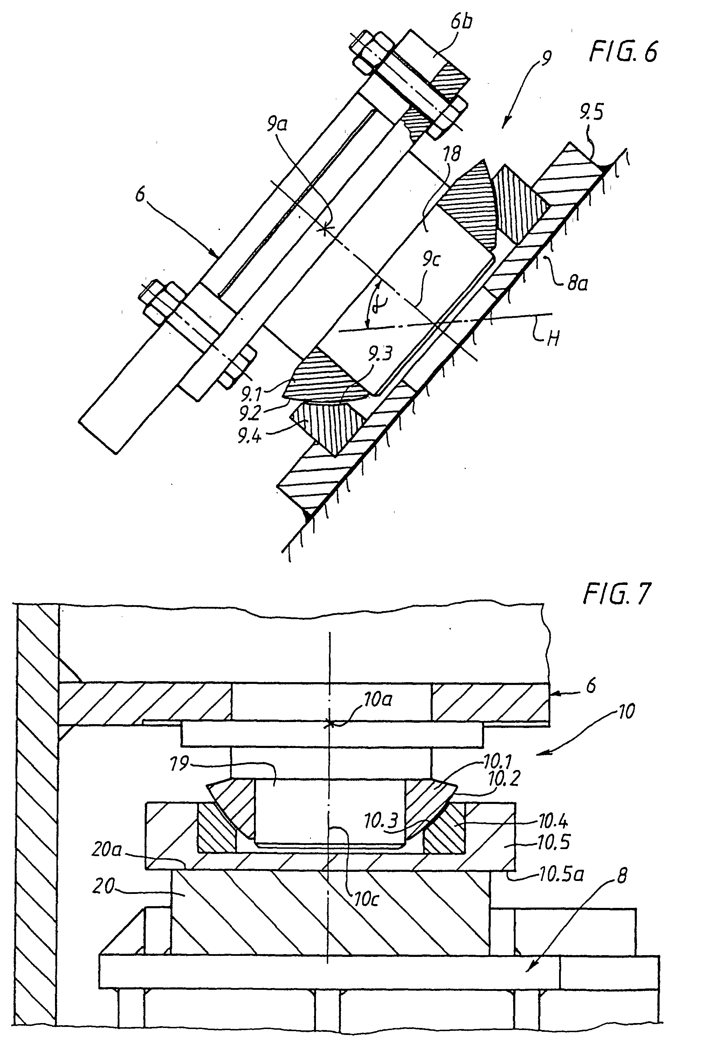

Von besonderer Bedeutung ist weiterhin eine Stellvorrichtung 14, die im Bereich des äußeren Gelenklagers 10 vorgesehen ist (vgl. z.B. Fig.3 und 5) und an der bzw. jeder Sohlplatte 6 in der Weise angreift, daß diese Sohlplatte 6 in Richtung der bereits erwähnten kreisbogenförmigen gleitbeweglichen Abstützung (Doppelpfeil 11) des äußeren Gelenklagers 10 gegenüber dem ortsfesten Fundament 7 bzw. dem Fundamentrahmen 8 verlagert werden kann, wodurch die von ihr getragene Laufrolle 3 im Sinne einer Schränkungsverstellung gegenüber der Lauffläche bzw. dem Lauf ring 4 des Drehrohrs 1 genau justiert werden kann.

Wie in der vergrößerten Detail-Ansicht gemäß Fig.5 zu erkennen ist, enthält die Stellvorrichtung 14 zur Schränkungsverstellung der Laufrolle 3 (über die zugehörige Sohlplatte 6) zwei mit axialem Abstand einander gegenüberliegende, relativ gegeneinander verstellbar, im wesentlichen horizontal wirkende Einstellschrauben 15 (die sich koaxial gegenüberliegen) sowie ein zwischen den gegeneinanderweisenden Enden 15a dieser Einstellschrauben 15 angeordnetes Anschlagorgan 16, dessen Seitenflächen 16a, 16b Anschlag- bzw. Kontaktflächen für diese Schraubenenden 15a bilden. Hierbei wird es für zweckmäßig angesehen, wenn die beiden Einstellschrauben 15 etwa im Bereich des äußeren Gelenklagers 10 an der Unterseite 6a der Sohlplatte 6 befestigt (beispielsweise angeschweißt) sind, während das Anschlagorgan 16 etwa aufrechtstehend (wie in Fig.5 dargestellt) auf dem Fundamentrahmen fest angebracht ist und dabei mit seinem oberen Ende 16c hinreichend weit in den Bereich zwischen die beiden Einstellschraubenenden 15a frei hineinreicht, dabei jedoch noch genügend Abstand zur Sohlplatten-Unterseite 6a behält, damit es mit dieser Unterseite 6a bei der Kippbewegung der Sohlplatte 6 nicht in Berührung kommen kann.

Während das innere Gelenklager 9 jeder Sohlplatte 6 stets - wie erwähnt - in Form eines Kugelgelenklagers ausgeführt ist, kann das äußere Gelenklager 10 generell in jeder geeigneten Weise ausgeführt sein, die eine Schwenkbeweglichkeit in einer parallel zur vertikalen Längsmittelebene 3c der Laufrolle 3 liegende Schwenkebene 10b erlaubt. Dazu könnte das äußere Gelenklager 10 etwa in Form eines einfachen Scharnierlagers (Schwenkscharnierlagers) ausgeführt sein. Im vorliegenden Ausführungsbeispiel wird es jedoch vorgezogen, daß auch das äußere Gelenklager 10 der/jeder Sohlplatte 6 in Form eines Kugelgelenklagers ausgeführt ist (im wesentlichen gleichartig wie das innere Gelenklager 9).

Was die Ausbildung und Anordnung der beiden Gelenklager 9, 10 im Bereich zwischen zugehöriger Sohlplatte 6 und Fundamentrahmen 8 anbelangt, so sind beide Gelenklager 9, 10 jeder Sohlplatte 6 zum einen als Kugelgelenklager (wie erwähnt) und zum andern im wesentlichen als Axialgelenklager ausgeführt. Letzteres ist dadurch möglich, daß in der - in den Zeichnungsfiguren im wesentlichen dargestellten - Ausgangs- bzw. Grundstellung von Laufrolle 3 und Sohlplatte 6 die durch den Kugelmittelpunkt 10a hindurchgehende Mittelachse 10c des äußeren Gelenklagers 10 im wesentlichen vertikal ausgerichtet ist (vgl. insbesondere Fig.3 und 7). Demgegenüber ist die Mittelachse 9c des inneren Gelenklagers 9 mit einer Neigung α zur Horizontalen H ausgerichtet, wie die Fig.3 und 6 erkennen lassen. Diese Schräglage bzw. Neigung α wird durch die Wirkrichtung der auf die zugehörige Laufrolle 3 wirkenden resultierenden Kräfte bestimmt, d.h. aus der vektoriellen Addition (z.B. Lagerreibungskräften und ggf. Antriebskräften) sowie von Auflagerkräften. Die hierdurch ermöglichte Ausbildung der beiden Gelenklager 9, 10 jeder Sohlplatte 6 als Axial-Gelenklager bringt eine besonders einfache und damit kostengünstige Konstruktion dieser Gelenklager 9, 10 mit sich, was besonders deutlich wird, wenn man bedenkt, daß diese Gelenklager bei anderer Ausrichtung und Anordnung auch zusätzlich Radialbelastungen aufnehmen müßten, was eine entsprechend aufwendigere Gelenklagerkonstruktion mit sich brächte. Es sei jedoch erwähnt, daß eine Verwendung von axial und radial belastbaren Gelenklagern bei dieser erfindungsgemäßen Konstruktion grundsätzlich nicht ausgeschlossen ist.

In Fig. 2 ist ferner zu erkennen, daß der Kugelmittelpunkt 9a des inneren Kugelgelenklagers 9 senkrecht unter der Kontaktlinie 17 zwischen der Außenumfangsfläche - Lauffläche 3a der Laufrolle 3 und der Lauffläche/dem Laufring 4 des Drehrohres 1 angeordnet ist. Dies hat den Vorteil, daß von einer Axialbewegung des Drehrohres 1 herrührende Axialkräfte an der Laufrolle 3 (und entsprechend auch an der Sohlplatte 6) keinen Einfluß auf die Stelleinrichtung 14 für die Schränkung der Laufrolle 3 ausüben können.

Die konstruktive Gestaltung der beiden Kugelgelenklager 9 und 10 ist in den Fig.6 und 7 näher veranschaulicht. Darin läßt sich zunächst allgemein erkennen, daß beide Kugelgelenklager 9, 10 im wesentlichen gleichartig aufgebaut sind. Jedes Kugelgelenklager 9, 10 ist demnach vorzugsweise in Form eines Kugelkalottenlagers ausgebildet.

Betrachtet man zunächst den konstruktiven Aufbau des inneren Kugelgelenklagers 9 gemäß Fig.6, dann weist dieses Kugelgelenklager (Kugelkalottenlager 9) einen ersten Kugelkalottenteil 9.1 auf, der mit einer konvexen, kugelkalottenförmigen äußeren Gleitlagerfläche 9.2 in einer konkaven, kugelkalottenförmigen und gelenkpfannenartigen inneren Gleitlagerfläche 9.3 eines zweiten Kugelkalottenteiles 9.4 allseitig schwenkbeweglich gelagert ist. Diese beiden Kugelkalottenteile 9.1 und 9.4 sind etwa - wie Fig.6 deutlich zeigt - kreisringförmig ausgeführt, wobei der erste Kugelkalottenteil 9.1 auf einer Art Achsstummel 18 fest angebracht ist, der seinerseits an einem entsprechend schräg nach unten ausgerichteten Ansatz 6b der Sohlplatte 6 befestigt ist. Der zweite Kugelkalottenteil 9.4 ist dagegen - beispielsweise über einen Verbindungsteil 9.5 ortsfest auf einem entsprechend schräg nach oben ausgerichteten Befestigungsansatz 8a des Fundamentrahmens 8 angebracht bzw. abgestützt.

Auch das äußere Kugelgelenklager (Kugelkalottenlager) 10 besitzt einen ersten Kugelkalottenteil 10.1, der wiederum mit einer konvexen, kugelkalottenförmigen äußeren Gleitlagerfläche 10.2 in einer konkaven, kugelkalottenförmigen und gelenkpfannenartigen inneren Gleitlagerfläche 10.3 eines zweiten Kugelkalottenteiles 10.4 allseitig schwenkbeweglich gelagert ist. Auch bei diesem äußeren Kugelgelenklager (Kugelkalottenlager) 10 sind die beiden Kugelkalottenteile 10.1 und 10.4 - wie Fig.7 erkennen läßt - kreisringförmig ausgeführt. Allerdings ist der zweite Kugelkalottenteil 10.4 dieses äußeren Kugelgelenklagers 10 nicht fest (wie beim inneren Kugelgelenklager 9), sondern in Richtung des Doppelpfeiles 11 (Fig.4) gleitbeweglich auf dem Fundamentrahmen 8 abgestützt. Diese gleitbewegliche Abstützung könnte in der einfachsten Form dadurch geschehen, daß ein den zweiten Kugelkalottenteil 10.4 fest aufnehmender Verbindungsteil 10.5 sich mit seiner Unterseite 10.5a direkt auf einer entsprechenden, als Gleitwiderlager ausgebildeten Gegenfläche auf der Oberseite des Fundamentrahmens 8 abstützt. Nach dem in Fig.7 veranschaulichten Ausführungsbeispiel wird es jedoch vorgezogen, daß im Bereich unterhalb des Verbindungsteiles 10.5 ein ebenes, etwa plattenförmiges Gleitwiderlager 20 gesondert auf der Oberseite des Fundamentrahmens 8 - ggf. auswechselbar - befestigt ist, auf dessen als Gleitfläche ausgebildeten Oberseite 20a sich die ebenfalls als Gleitfläche ausgebildete Unterseite 10.5a des Verbindungsteiles 10.5 und damit der untere zweite Kugelkalottenteil 10.4 gleitbeweglich abstützt. Jedes Gleitwiderlager 20 ist somit in Form einer im wesentlichen flachen Gleitlagerplatte ausgebildet. Dieses Gleitwiderlager bzw. diese Gleitlagerplatte 20 ist zweckmäßig aus einem Gleitwerkstoff mit relativ niedrigen Reibwerten hergestellt, z.B. aus Grauguß oder entsprechendem Kunststoffmaterial.

Bei der bisher beschriebenen erfindungsgemäßen Laufrollenstation 2 ist jede Laufrolle 3 in optimaler Weise selbsteinstellend gegenüber dem zugehörigen Laufring 4 des Drehrohres 1 ausgeführt und angeordnet. Da diese selbsteinstellenden Laufrollen 3 negativ auf Axialkräfte reagieren, sollen sie keine Schränkung aufweisen. Aus diesem Grunde ist es zweckmäßig, die Position der Laufrollen 3 und ihrer Laufrollenachsen 3b - wie bereits weiter oben erwähnt - zumindest visuell zu kontrollieren, so daß im Falle einer auftretenden Schränkung der Laufrolle diese Schränkung mit Hilfe der Stellvorrichtung 14 rasch ausjustiert werden kann, um die entsprechende Laufrolle 3 möglichst schränkungsfrei einstellen zu können. Dabei kann eine wiederholte Einstellung der Schränkung durch veränderte Betriebsbedingungen des Drehrohres 1 sowie durch andere Einflüsse erforderlich sein. Die Betätigung der beschriebenen Stellvorrichtung 14 zur Schränkungsverstellung der Laufrollen 3 ist relativ leichtgängig und einfach. Betrachtet man dazu nochmals die Darstellung insbesondere in Fig.5, dann können die Einstellschrauben 15 als einfache Sechskantschrauben ausgeführt und in ihrer Einstellage durch entsprechende Kontermuttern (wie dargestellt) gesichert werden. Die Betätigung dieser Einstellschrauben 15 kann damit rasch und ohne besonderen Aufwand mit Hilfe eines passenden Schraubenschlüssels erfolgen.

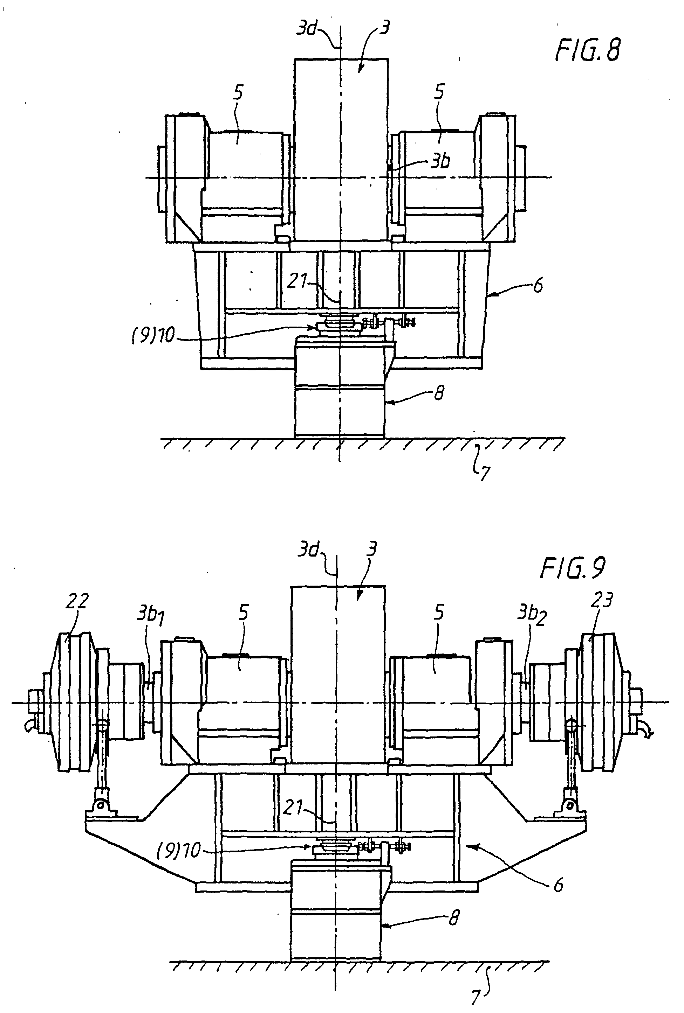

Wie aus der Praxis an sich bekannt ist, können die Laufrollen 3 von Laufrollenstationen 2 für Drehrohre 1 als reine Trag- bzw. Stützlagerrollen oder auch als antreibbare Laufrollen ausgeführt sein. Beispiele hierfür seien unter Bezugnahme auf die erfindungsgemäße Ausführung einer Laufrollenstation anhand der Fig.8, 9 und 10 nachfolgend erläutert.

Aus den vorhergehenden Erläuterungen der erfindungsgemäßen Ausführung der bzw. jeder Laufrollenstation 2 sowie aus den entsprechenden vorhergehenden Zeichnungsfiguren ergibt sich bereits im wesentlichen, daß die Mittelachsen 9c, 10c (bzw. deren entsprechenden oberen Mittelabschnitte) der zusammen mit der zugehörigen Sohlplatte 6 kippbeweglichen oberen Gelenklagerteile, also der ersten Kugelkalottenteile 9.1 und 10.1, beider Gelenklager 9, 10 in einer gemeinsamen, senkrecht zur Sohlplatte 6 verlaufenden Bezugsebene liegen, die rechtwinklig zur vertikalen Längsmittelebene 3c (Fig.2) der zugehörigen Laufrolle 3 ausgerichtet ist.

Wenn nun hierbei jede Laufrolle 3 entsprechend der Darstellung in Fig.8 als reine Stützlagerrolle ausgebildet ist, dann ist die zugehörige Laufrollenachse 3b mit ihren Enden in den beiden Drehlagern 5 gelagert, die beidseitig zur symmetrischen vertikalen Quermittelebene 3d der Laufrolle angeordnet sind. Bei dieser Ausbildung (Fig.8) der Laufrolle 3 fällt die oben erwähnte Bezugsebene 21 für die oberen Gelenklagerteile 9.1, 10.1 der Gelenklager 9, 10 mit der symmetrischen vertikalen Quermittelebene 3d der Laufrolle 3 zusammen, weil Laufrolle 3 mit Laufrollenachse 3b, die beiden Drehlager 5, die Sohlplatte 6 und die Gelenklager 9, 10 ein Gleichgewichtssystem in bezug auf die Quermittelebene 3d bilden.

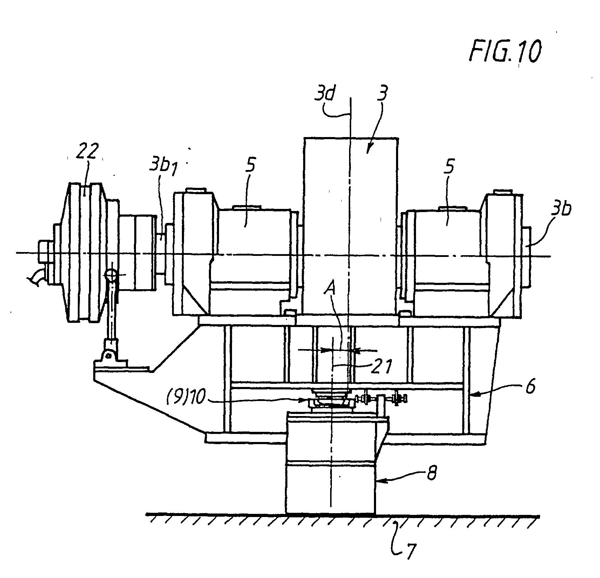

Im Prinzip gleichartig verhält es sich bei dem in Fig.9 veranschaulichten Ausführungsbeispiel, in dem eine Laufrolle 3 antreibbar ausgeführt ist, und zwar indem an beide Enden 3b₁ und 3b₂ dieser Laufrolle 3 ein Untersetzungs-Antriebsmotor 22, 23 angeflanscht ist, bei dem es sich vorzugsweise jeweils um einen Hydraulikmotor, grundsätzlich jedoch auch um einen entsprechenden Elektromotor handeln kann. Der Unterschied dieses Ausführungsbeispieles gemäß Fig.9 zu dem gemäß Fig.8 besteht somit lediglich darin, daß an beide Laufrollenenden ein gleichartiger Antriebsmotor 22, 23 angebracht ist, so daß sich auch hier ein Gleichgewichtssystem beiderseits der symmetrischen vertikalen Quermittelebene 3d der Laufrolle ergibt. Hierdurch kann wiederum die oben erläuterte Bezugsebene 21 mit der zuvor genannten Quermittelebene 3d der Laufrolle 3 zusammenfallen. Sowohl im Beispiel der Fig.8 als auch im Beispiel der Fig.9 ergeben sich daher baulich symmetrische Ausführungen, die in bezug auf auftretende Dreh- und Kippmomente leicht zu beherrschen sind.

Das Ausführungsbeispiel gemäß Fig.10 weicht von denen gemäß den Fig.8 und 9 dadurch ab, daß bei ansonsten gleichem Aufbau lediglich an einem Laufrollenende 3b₁ ein Untersetzungs-Antriebsmotor 22 angeflanscht ist; die Laufrolle 3 ist daher ebenfalls antreibbar ausgeführt. Da sich bei diesem Ausführungsbeispiel (Fig.10) in bezug auf die symmetrische vertikale Quermittelebene 3d der Laufrolle 3 aufgrund des einseitigen Motorantriebs gewissermaßen ein Ungleichgewicht ergibt, muß im Hinblick auf die kippbewegliche Abstützung der Sohlplatte 6 (über die Gelenklager 9, 10 auf dem Fundamentrahmen 8) für einen entsprechenden Ausgleich gesorgt werden. Aus diesem Grunde ist bei diesem dritten Ausführungsbeispiel (Fig.10) die die Mittelachsen der oberen Gelenklagerteile beider Gelenklager 9, 10 enthaltende Bezugsebene 21 um ein entsprechendes Ausgleichsmaß A parallel zur symmetrischen vertikalen Quermittelebene 3d der Laufrolle 3 versetzt.

## Patentansprüche

1. Laufrollenstation zur kippbeweglichen, axialverschiebbaren, drehbaren Abstützung eines umlaufend antreibbaren Drehrohres (1), wie Drehrohrofen, Trommeltrockner u.dgl., enthaltend zwei symmetrisch zu beiden Seiten einer vertikalen Längsmittelebene (1b) des Drehrohres (1) liegende Laufrollen (3), auf deren Außenumfangsflächen (3a) eine Lauffläche (4) des Drehrohres (1) drehbar abgestützt und von denen jede über ihre Lauf rollenachse (3b) in zwei Drehlagern (5) frei drehbar gelagert ist, die auf einer kippbeweglich auf einem ortsfesten Fundament (7, 8) abgestützten Sohlplatte (6) befestigt sind,
**dadurch gekennzeichnet,**
**daß** jede eine Laufrolle (3) tragende Sohlplatte (6) auf dem Fundament (7, 8) über zwei mit Querabstand (QA) voneinander quer zur Längsachse des Drehrohres angeordnete Gelenklager (9, 10) abgestützt ist, von denen das näher zur vertikalen Längsmittelebene (1b) des Drehrohres (1) liegende innere Gelenklager (9) in Form eines Kugelgelenklagers ausgebildet und dabei als Festlager ortsfest auf dem Fundament (7, 8) abgestützt ist, während das von dieser vertikalen Längsmittelebene (1b) weiter entfernt liegende äußere Gelenklager (10) ein Loslager bildet und um den Kugelmittelpunkt (9a) des inneren Kugelgelenklagers (9) etwa kreisbogenförmig gleitbeweglich auf dem Fundament (7, 8) abgestützt ist.

2. Laufrollenstation nach Anspruch 1, **dadurch gekennzeichnet, daß** im Bereich des äußeren Gelenklagers (10) eine Stellvorrichtung (14) vorgesehen ist und an der Sohlplatte (6) derart angreift, daß diese Sohlplatte in Richtung der kreisförmigen gleitbeweglichen Abstützung des äußeren Gelenklagers (10) gegenüber dem Fundament (7, 8) verlagerbar und damit die von ihr getragene Laufrolle (3) im Sinne einer Schränkungsverstellung gegenüber der Drehrohr-Lauffläche (4) justierbar ist.

3. Laufrollenstation nach Anspruch 1, **dadurch gekennzeichnet, daß** eine die Gelenkmittelpunkte (9a, 10a) vom inneren und äußeren Gelenklager (9, 10) verbindende Gerade eine geometrische Schwenkachse als gemeinsame Kippachse (12) für diese Gelenklager bildet, wobei die zugehörige Laufrolle (3) samt der sie tragenden Sohlplatte (6) um diese Kippachse (12) kippbeweglich ist.

4. Laufrollenstation nach Anspruch 3, **dadurch gekennzeichnet, daß** die Kippachse 12 im wesentlichen horizontal verläuft.

5. Laufrollenstation nach Anspruch 1 oder 3, **dadurch gekennzeichnet, daß** das äußere Gelenklager (10) der Sohlplatte (6) ebenfalls in Form eines Kugelgelenklagers ausgeführt ist.

6. Laufrollenstation nach Anspruch 1 oder 3, **dadurch gekennzeichnet, daß** das äußere Gelenklager (10) der Sohlplatte etwa in Form eines in einer parallel zur vertikalen Längsmittelebene (3c) der Laufrolle (3) liegenden Schwenkebene (10b) schwenkbeweglichen Scharnierlagers ausgeführt ist.

7. Laufrollenstation nach den Ansprüchen 3 und 5, **dadurch gekennzeichnet, daß** jedes Kugelgelenklager (9, 10) in Form eines Kugelkalottenlagers ausgebildet ist und einen ersten Kugelkalottenteil (9.1, 10.1) aufweist, der mit einer konvexen, kugelkalottenförmigen äußeren Gleitlagerfläche (9.2, 10.2) in einer konkaven, kugelkalottenförmigen und gelenkpfannenartigen inneren Gleitlagerfläche (9.3, 10.3) eines zweiten Kugelkalottenteiles (9.4, 10.4) allseitig schwenkbeweglich gelagert ist.

8. Laufrollenstation nach Anspruch 7, **dadurch gekennzeichnet, daß** die beiden Kugelkalottenteile (9.1, 9.4, 10.1, 10.4) jedes Kugelgelenklagers (9, 10) etwa kreisringförmig ausgeführt sind, wobei jeweils der eine Kugelkalottenteil (9.1, 10.1) fest mit der beweglichen Sohlplatte (6) verbunden und der zweite Kugelkalottenteil (9.4, 10.4) auf dem Fundament (7, 8) abgestützt ist.

9. Laufrollenstation nach Anspruch 8, **dadurch gekennzeichnet, daß** der zweite Kugelkalottenteil (9.4) des inneren Kugelgelenklagers (9) fest mit dem Fundament (7, 8) verbunden ist, während der zweite Kugelkalottenteil (10.4) des äußeren Kugelgelenklagers (10) durch eine Gleitfläche (10.5a) auf einem fest mit dem Fundament verbundenen ebenen Gleitwiderlager (20) gleitbeweglich abgestützt ist.

10. Laufrollenstation nach wenigstens einem der Ansprüche 1 bis 7, **dadurch gekennzeichnet, daß** beide Gelenklager (9, 10) der Sohlplatte (6) im wesentlichen als Axialgelenklager ausgeführt sind und daß in der Grundstellung von Laufrolle (3) und Sohlplatte (6) die Mittelachse (10c) des äußeren Gelenklagers (10) im wesentlichen vertikal und die Mittelachse (9c) des inneren Gelenklagers (9) mit einer Neigung (α) zur Horizontalen (H) ausgerichtet ist, wobei diese Neigung (α) durch die Wirkrichtung der auf die zugehörige Laufrolle (3) wirkenden resultierenden Kräfte bestimmt wird.

11. Laufrollenstation nach Anspruch 10, **dadurch gekennzeichnet, daß** der Kugelmittelpunkt (9a) des inneren Kugelgelenklagers (9) im wesentlichen senkrecht unter der Kontaktlinie (17) zwischen der Außenumfangsfläche (3a) der Laufrolle (3) und der Lauffläche (4) des Drehrohres (1) angeordnet ist.

12. Laufrollenstation nach Anspruch 2 und/oder 11, **dadurch gekennzeichnet, daß** die Stellvorrichtung (14) zur Schränkungsverstellung der Laufrolle (3) zwei mit axialem Abstand einander gegenüberliegende, relativ gegeneinander verstellbare, im wesentlichen horizontal wirkende Einstellschrauben (15) sowie ein zwischen den gegeneinanderwirkenden Enden (15a) der Einstellschrauben angeordnetes Anschlagorgan (16) enthält, dessen Seitenflächen (16a, 16b) Anschlagflächen für diese Schraubenenden (15a) bilden.

13. Laufrollenstation nach Anspruch 12, **dadurch gekennzeichnet, daß** die Einstellschrauben (15) etwa im Bereich des äußeren Gelenklagers (10) an der Unterseite (6a) der Sohlplatte (6) befestigt sind, während das Anschlagorgan (16) etwa aufrechtstehend auf dem Fundament (7, 8) fest angebracht ist und mit seinem oberen Ende (16c) in den Bereich zwischen die beiden Einstellschraubenenden (15a) frei hineinragt.

14. Laufrollenstation nach wenigstens einem der vorhergehenden Ansprüche, **dadurch gekennzeichnet, daß** die Mittelachsen der zusammen mit der Sohlplatte (6) kippbeweglichen oberen Gelenklagerteile (9.1, 10.1) beider Gelenklager (9, 10) in einer gemeinsamen, senkrecht zur Sohlplatte (6) verlaufenden Bezugsebene (21) liegen, die rechtwinklig zur vertikalen Längsmittelebene (3c) der zugehörigen Laufrolle (3) ausgerichtet ist.

15. Laufrollenstation nach Anspruch 14, **dadurch gekennzeichnet, daß** bei jeder als reine Stützlagerrolle ausgebildeten Laufrolle (3) die Bezugsebene (21) mit der symmetrischen Quermittelebene (3d) der Laufrolle (3) zusammenfällt.

16. Laufrollenstation nach Anspruch 14, **dadurch gekennzeichnet, daß** wenigstens eine Laufrolle (3) antreibbar ausgeführt, an beiden Enden (3b₁, 3b₂) dieser Laufrolle ein Untersetzungs-Antriebsmotor (22, 23) angeflanscht und dabei die Bezugsebene (21) mit der symmetrischen Quermittelebene der Laufrolle zusammenfallend ausgerichtet ist.

17. Laufrollenstation nach Anspruch 14, **dadurch gekennzeichnet, daß** wenigstens eine Laufrolle (3) antreibbar ausgeführt und nur an einem Ende (3b₁) der Laufrollenachse (3b) ein Untersetzungs-Antriebsmotor (22) angeflanscht ist und daß dabei die Bezugsebene (21) um ein Ausgleichsmaß (A) parallel zur symmetrischen Quermittelebene (3d) der Laufrolle (3) versetzt ist.

18. Laufrollenstation nach wenigstens einem der vorhergehenden Ansprüche, **dadurch gekennzeichnet, daß** jede Sohlplatte (6) direkt auf einem fest auf dem eigentlichen Fundament (7) angeordneten Fundamentrahmen (8) abgestützt ist.

19. Laufrollenstation nach Anspruch 18, **dadurch gekennzeichnet, daß** auf dem Fundamentrahmen (8) die Gleitwiderlager (20) für die äußeren Gelenklager (10) in Form von im wesentlichen flachen Gleitlagerplatten fest angebracht sind, die aus einem Gleitwerkstoff mit relativ niedrigen Reibwerten hergestellt sind.

20. Laufrollenstation nach Anspruch 18, **dadurch gekennzeichnet, daß** jede Laufrolle (3) der Laufrollenstation (2) auf einer gesonderten Sohlplatte (6) angeordnet ist und beide Sohlplatten (6) auf einem gemeinsamen Fundamentrahmen (8) abgestützt sind.

## Claims

1. Supporting roller set for tiltable, axially movable and rotatable support for a rotary drum (1) which can be driven in rotation, such as a rotary kiln, rotary dryer and the like, which contains two supporting rollers (3) which lie symmetrically on both sides of a vertical longitudinal central plane (1b) of the rotary drum (1), a running surface (4) of the rotary drum (1) being rotatably supported and on the outer circumferential surfaces (3a) of the said supporting rollers, wherein each of these supporting rollers is freely rotatably mounted by way of its supporting roller axle (3b) in two rotary bearings (5) which are fixed bedplate (6) tiltably supported on a static foundation (7, 8), **characterised in that** each bedplate (6) bearing a supporting roller (3) - when viewed (Figure 2) transversely with respect to the rotary drum (1) and to the supporting rollers (3) - is supported on the foundation (7, 8) by way of two articulated bearings (9, 10) which are transversely spaced (QA) from one another, of which the inner articulated bearing (9) which lies nearer to the vertical longitudinal central axis (1b) of the rotary drum (1) is constructed in the form of a ball-and-socket bearing and as a fixed bearing is supported statically on the foundation (7, 8), whilst the outer articulated bearing (10) which lies further away from this vertical longitudinal central plane (1b) forms a movable bearing and is supported so as to be slidably movable on the foundation (7, 8) approximately in the shape of an arc of a circle about the central point (9) of the ball of the inner ball-and-socket bearing (9).

2. Supporting roller set as claimed in Claim 1, **characterised in that** an adjusting device (14) is provided in the region of the outer articulated bearing (10) and acts on the bedplate (6) in such a way that this bedplate is displaceable in the direction of the arcuate slidably movable support of the outer articulated bearing (10) relative to the foundation (7, 8) and thus the supporting roller (3) borne by it is adjustable in the sense of a skewing adjustment relative to the rotary drum running surface (4).

3. Supporting roller set as claimed in Claim 1, **characterised in that** a straight line 1(2) connecting the central points of articulation (9a, 10a) of the inner and outer articulated bearings (9, 10) forms a geometric pivot axis as a common axis of tilt (12) for these articulated bearings, whereby the appertaining supporting roller (3) together with the bedplate (6) which bears it is tiltable about this axis of tilt (12).

4. Supporting roller set as claimed in Claim 3, **characterised in that** the axis of tilt (12) extends substantially horizontally.

5. Supporting roller set as claimed in Claim 1 or 3, **characterised in that** the outer articulated bearing (10) of the bedplate (6) is also constructed in the form of a ball-and-socket bearing.

6. Supporting roller set as claimed in Claim 1 or 3, **characterised in that** the outer articulated bearing (10) of the bedplate (6) is constructed approximately in the form of a hinge bearing which is pivotable in a pivot plane (10b) lying parallel to the vertical longitudinal central plane (3c) of the supporting roller (3).

7. Supporting roller set as claimed in Claims 3 and 5, **characterised in that** each ball-and-socket bearing (9, 10) is constructed in the form of a spherical segment bearing and has a first spherical segment part (9.1, 10.1) which with a convex outer plain bearing surface (9.2, 10.2) in the shape of a spherical segment is mounted so as to be capable of universal swivelling movement in a concave inner plain bearing surface (9.3, 10.3), which is in the shape of a spherical segment and like a joint seat, of a second spherical segment part (9.4, 10.4).

8. Supporting roller set as claimed in Claim 7, **characterised in that** the two spherical segment parts (9.1, 9.4, 10.1, 10.4) of each ball-and-socket bearing (9, 10) are of approximately circular construction, whereby in each case one spherical segment part (9.1, 10.1) is firmly connected to the movable bedplate (6) and second spherical segment part (9.4, 10.4) is supported on the foundation (7, 8).

9. Supporting roller set as claimed in Claim 8, **characterised in that** the second spherical segment part (9.4) of the inner ball-and-socket bearing (9) is firmly connected to the foundation (7, 8), whilst the second spherical segment part (10.4) of the outer ball-and-socket bearing (10) is supported by a sliding surface (10.5a) so as to be slidably movable on a planar sliding abutment (20) firmly connected to the foundation.

10. Supporting roller set as claimed in at least one of Claims 1 to 7, **characterised in that** both articulated bearings (9, 10) of the bedplate (6) are constructed substantially as axial articulated bearings and that in the normal position of the supporting roller (3) and bedplate (6) the central axis (10c) of the outer articulated bearing (10) is oriented substantially vertically and the central axis (9c) of the inner articulated bearing (9) is oriented at an inclination (α) with respect to the horizontal (H), this inclination (α) being determined by the direction of action of the resultant forces acting on the appertaining supporting roller (3).

11. Supporting roller set as claimed in Claim 10, **characterised in that** the central point (9a) of the inner ball-and-socket bearing (9) is disposed vertically below the contact line (17) between the outer circumferential surface (3a) of the supporting roller (3) and the running surface (4) of the rotary drum (1).

12. Supporting roller set as claimed in Claim 2 and/or 11, **characterised in that** the adjusting device (14) for adjustment of the skewing of the supporting roller (3) comprises two adjusting screws (15) which lie axially spaced opposite one another, are movable relative to one another and act substantially horizontally, as well as a stop element (16), the lateral faces (16a, 16b) of which form stop surfaces for the ends (15a) of these screws.

13. Supporting roller set as claimed in Claim 12, **characterised in that** the adjusting screws (15) are fixed on the underside (6a) of the bedplate (6) approximately in the region of the outer articulated bearing (10), whilst the stop element (16) is firmly mounted in an approximately upright position on the foundation (7, 8) and protrudes freely with its upper end (16c) into the region between the ends (15a) of the two adjusting screws.

14. Supporting roller set as claimed in at least one of the preceding claims, **characterised in that** the central axes of the upper articulated bearing parts (9.1, 10.1) which are tiltable together with the bedplate (6) of both articulated bearings (9, 10) lie in a common reference plane (21) which extends perpendicular to the bedplate (6) and is oriented at right angles to the vertical longitudinal central plane (3c) of the appertaining supporting roller (3).

15. Supporting roller set as claimed in Claim 14, **characterised in that** in the case of each supporting roller (3) constructed purely as a support bearing roller the reference plane (21) coincides with the symmetrical transverse central plane (3d) of the supporting roller (3).

16. Supporting roller set as claimed in Claim 14, **characterised in that** at least one supporting roller (3) is constructed so as to be drivable, a reduction drive motor (22, 23) is flanged on to the two ends (3b₁, 3b₂) of this supporting roller, and in this case the reference plane (21) is oriented so as to coincide with the symmetrical transverse central plane of the supporting roller.

17. Supporting roller set as claimed in Claim 14, **characterised in that** at least one supporting roller (3) is constructed so as to be drivable and a reduction drive motor (22) is flanged on only at one end (3b₁) of the supporting roller axle (3b) and that in this case the reference plane (21) is displaced parallel to the symmetrical vertical transverse central plane (3d) of the supporting roller (3) by a balancing distance (A).

18. Supporting roller set as claimed in at least one of the preceding claims, **characterised in that** each bedplate (6) is supported directly on a base frame (8) disposed firmly on the actual foundation (7).

19. Supporting roller set as claimed in Claim 18, **characterised in that** the sliding abutments (20) for the outer articulated bearings (10) are firmly mounted on the base frame (8) in the form of substantially flat plain bearing plates which are produced from a sliding material with relatively low coefficients of friction.

20. Supporting roller set as claimed in Claim 18, **characterised in that** each supporting roller (3) of the supporting roller set (2) is disposed on a separate bedplate (6) and both bedplates (6) are supported on a common base frame (8).

## Revendications

1. Station à cylindres de roulement pour le soutien rotatif, déplaçable axialement, de manière basculante d'un corps tubulaire rotatif (1) actionnable de manière rotative, comme des fours tubulaires tournants, des séchoirs à tambour, etc., contenant deux cylindres de roulement (3) situés de manière symétrique aux deux côtés d'un plan médian longitudinal (1b) vertical, sur les surfaces périphériques extérieures (3a) desquelles s'appuient de manière rotative, une surface de roulement (4) du corps tubulaire rotatif (1) et dont chacun est positionné de manière à pouvoir librement entrer en rotation, par leur axe de cylindre de roulement (3b) sur deux coussinets de pivotement (5), qui sont fixés sur une plaque d'assise (6) s'appuyant de manière basculante sur une base fixe (7, 8), **caractérisé en ce que** chaque plaque d'assise (6) portant un cylindre de roulement (3) s'appuie sur la base (7, 8) par deux appuis libres mobiles (9, 10) disposés à une distance transversale (QA), transversalement à l'axe longitudinal du corps tubulaire rotatif, dont l'appui libre mobile (9) interne placé près du plan médian longitudinal vertical (1b) du corps tubulaire rotatif (1) a la forme d'un appui libre mobile sphérique et ainsi, s'appuie fixement, comme un appui fixe, sur la base (7, 8), alors que l'appui mobile libre (10) extérieur se trouvant séparé de ce plan médian longitudinal vertical (1b) forme un palier libre et s'appuie sur la base (7,8) de manière à glisser selon un arc de cercle autour du point central de sphère (9a) de l'appui libre mobile (9) interne.

2. Station à cylindres de roulement suivant la revendication 1, **caractérisée en ce que** dans la zone de l'appui mobile libre extérieur (10), un dispositif de réglage (14) est prévu et agit sur la plaque d'assise (6) de sorte que cette plaque d'assise peut être déplacée en direction du soutien à glissière en arc de cercle de l'appui libre mobile (10) extérieur par rapport à la base (7, 8) et ainsi, le cylindre de roulement (3) supporté par celle-ci est ajustable dans le sens d'un ajustement de décalage par rapport au corps tubulaire rotatif-surface de roulement (4).

3. Station à cylindres de roulement suivant la revendication 1, **caractérisée en ce qu'**une droite reliant les points centraux (9a, 10a) des appuis libres mobiles interne et extérieur (9, 10) forme un axe oscillant géométrique comme axe commun de retournement (12) pour cet appui libre mobile, où le cylindre de roulement (3) se déplace de manière basculante avec la plaque d'assise (6) le portant autour de cet axe de retournement (12).

4. Station à cylindres de roulement suivant la revendication 3, **caractérisée en ce que** l'axe de retournement 12 est essentiellement horizontal.

5. Station à cylindres de roulement suivant la revendication 1 ou 3, **caractérisée en ce que** l'appui mobile libre (10) extérieur de la plaque d'assise (6) a également la forme d'un appui libre mobile sphérique.

6. Station à cylindres de roulement suivant la revendication 1 ou 3, **caractérisée en ce que** l'appui libre mobile extérieur (10) de la plaque d'assise à la forme d'un appui à charnière oscillant dans un plan d'oscillation (10b) parallèle au plan médian longitudinal vertical (3c) du cylindre de roulement (3).

7. Station à cylindres de roulement suivant les revendications 3 et 5, **caractérisée en ce que** chaque appui libre mobile sphérique (9, 10) a la forme d'un appui à calotte sphérique et présente une première partie à calotte sphérique (9.1, 10.1), qui se trouve selon un mouvement oscillant de tous côtés avec une surface de palier à glissière (9.2, 10.2) extérieure en forme de calotte sphérique, convexe dans une surface de palier à glissière (9.3, 10.3) interne de type cavité articulaire, en forme de calotte sphérique, concave d'une deuxième partie à calotte sphérique (9.4, 10.4).

8. Station à cylindres de roulement suivant la revendication 7, **caractérisée en ce que** les deux parties à calotte sphérique (9.1, 9.4, 10.1, 10.4) de chaque appui libre mobile sphérique (9, 10) a la forme d'une couronne, où chaque fois, une des parties de calotte sphérique (9.1, 10.1) est fixement liée à la plaque d'assise mobile (6) et la deuxième partie de calotte sphérique (9.4, 10.4) s'appuie sur la base (7, 8).

9. Station à cylindres de roulement suivant la revendication 8, **caractérisée en ce que** la deuxième partie de calotte sphérique (9.4) de l'appui mobile libre sphérique (9) interne est reliée fixement à la base (7, 8), alors que la deuxième partie de calotte sphérique (10.4) de l'appui mobile libre (10) extérieur s'appuie selon un mouvement de glissière par une surface lisse (10.5a) sur un appui résistant au glissement (20) plan relié solidement à la base.

10. Station à cylindres de roulement suivant au moins l'une des revendications 1 à 7, **caractérisée en ce que** les deux appuis libres mobiles (9, 10) de la plaque d'assise (6) sont essentiellement réalisés comme un appui libre mobile axial et **en ce que** dans l'arrangement de base du cylindre de roulement (3) et de la plaque d'assise (6), l'axe médian (10c) de l'appui libre mobile (10) extérieur est essentiellement vertical et l'axe médian (9c) de l'appui libre mobile (9) interne présente une inclinaison (α) par rapport à l'horizontale (H), où cette inclinaison (α) est déterminée par la direction d'action de la force résultante agissant sur le cylindre de roulement (3).

11. Station à cylindres de roulement suivant la revendication 10, **caractérisée en ce que** le point central de sphère (9a) de l'appui libre mobile (9) interne est disposé essentiellement perpendiculairement sous la ligne de contact (17) entre la surface périphérique externe (3a) du cylindre de roulement (3) et de la surface de roulement (4) du corps tubulaire rotatif (1).

12. Station à cylindres de roulement suivant la revendication 2 et/ou 11, **caractérisée en ce que** le dispositif de réglage (14) pour le réglage du décalage du cylindre de roulement (3) contient deux boulons d'ajustage (15) agissant essentiellement horizontalement, réglables l'un par rapport à l'autre, se trouvant à une distance axiale l'un de l'autre, ainsi qu'un organe d'arrêt (16) disposé entre les extrémités (15a) antagonistes des boulons d'ajustage, dont les faces latérales (16a, 16b) forment des surfaces d'arrêt pour ces extrémités de boulon (15a).

13. Station à cylindres de roulement suivant la revendication 12, **caractérisée en ce que** les boulons d'ajustage (15) sont fixés dans la zone de l'appui libre mobile (10) extérieur sur la face inférieure (6a) de la plaque d'assise (6), alors que l'organe d'arrêt (16) est disposé droit sur la base (7, 8) et s'étend librement, avec son extrémité supérieure (16c), dans la zone entre les deux plans des boulons d'ajustement (15a).

14. Station à cylindres de roulement suivant au moins l'une des revendications précédentes, **caractérisée en ce que** les axes médians des parties d'appui libre mobile (9.1, 10.1) supérieures, de manière basculante avec la plaque d'assise (6) des deux appuis libres mobiles (9, 10) se trouvent dans un plan de référence commun, perpendiculaire aux plaques d'assise (6), lequel plan de référence est dirigé de manière orthogonale au plan médian longitudinal vertical (3c) du cylindre de roulement (3).

15. Station à cylindres de roulement suivant la revendication 14, **caractérisée en ce que** pour chaque cylindre de roulement (3) formé comme un cylindre d'appui pur, le plan de référence (21) coïncide avec le plan médian transversal symétrique (3d) du cylindre de roulement (3).

16. Station à cylindres de roulement suivant la revendication 14, **caractérisée en ce qu'**au moins un cylindre de roulement (3) est réalisé de manière propulsable, sur les deux extrémités (3b₁, 3b₂) de ce cylindre de roulement, est bridé un moteur d'actionnement (22, 23) et le plan de référence (21) coïncide au plan médian transversal symétrique du cylindre de roulement.

17. Station à cylindres de roulement suivant la revendication 14, **caractérisée en ce qu'**au moins un cylindre de roulement (3) est réalisé de manière propulsable et sur seulement une extrémité (3b₁) de l'axe du cylindre de roulement (3b) est bridé un moteur d'actionnement (22) et **en ce que** le plan de référence (21) est déplacé parallèlement au plan médian transversal symétrique (3d) du cylindre de roulement (3), autour d'une grandeur d'équilibre (A).

18. Station à cylindres de roulement suivant au moins l'une quelconque des revendications précédentes, **caractérisée en ce que** chaque plaque d'assise (6) s'appuie directement sur un cadre de base (8) disposée fixement sur la base individuelle (7).

19. Station à cylindres de roulement suivant la revendication 18, **caractérisée en ce que** sur le cadre de base (8), les appuis résistant au glissement (20) pour l'appui libre mobile (10) sont installés sous forme de plaque de palier à glissière essentiellement plat, qui sont réalisés à partir d'un matériau de glissement avec une valeur de frottement relativement faible.

20. Station à cylindres de roulement suivant la revendication 18, **caractérisée en ce que** chaque cylindre de roulement (3) de la station à cylindres de roulement (2) est disposé sur une plaque d'assise (6) séparée et les deux plaques d'assise (6) s'appuient sur un cadre de base (8) commun.
